# EUROPÄISCHE PATENTSCHRIFT

(11) **EP 3 655 630 B1**
(45) Veröffentlichungstag und Bekanntmachung des Hinweises auf die Patenterteilung: **26.06.2024**
(21) Anmeldenummer: 18759866.9
(22) Anmeldetag: 09.08.2018
(51) Int. Cl.: F01D 5/10, F01M 5/00, F16N 7/00, G01M 1/36

(54) **REGELUNG ZUR EINSTELLUNG DER LAGERÖLTEMPERATUR ZWECKS MINIMIERUNG DER ROTORSCHWINGUNGEN**
CONTROL METHOD FOR ADJUSTING THE TEMPERATURE OF BEARING OIL FOR THE PURPOSE OF MINIMISING ROTOR VIBRATIONS
PROCÉDÉ DE RÉGULATION POUR LE RÉGLAGE DE LA TEMPÉRATURE DE L'HUILE DES PALIERS AFIN DE RÉDUIRE LES VIBRATIONS DU ROTOR

(30) Priorität: 07.09.2017 DE 102017215767
(43) Veröffentlichungstag der Anmeldung: 27.05.2020
(73) Patentinhaber: Innomotics GmbH, 90441 Nürnberg (DE)
(72) Erfinder: MASHKIN, Andrey, 50672 Köln (DE); BURZAN, Robin, 45481 Mülheim an der Ruhr (DE); GRAU SORARRAIN, Esteban, 40219 Düsseldorf (DE); JÄKEL, Christian, 47169 Duisburg (DE); KOWALSKI, Matthias, 45478 Mülheim an der Ruhr (DE); MÜNNEKHOFF, Alexander, 45133 Essen (DE); RÖHR, Florian, 45481 Mülheim a.d. Ruhr (DE); ZAHN, Sebastian, 76131 Karlsruhe (DE); ZIMMER, Gerta, 45468 Mülheim an der Ruhr (DE)
(74) Vertreter: Siemens Patent Attorneys
(86) Internationale Anmeldenummer: PCT/EP2018/071655
(87) Internationale Veröffentlichungsnummer: WO 2019/048177

(56) Entgegenhaltungen:
- DE-A1- 4 404 301
- US-A- 3 124 395
- US-A- 4 643 592
- US-A- 5 099 966
- US-A1- 2018 245 632

## Beschreibung

Die Erfindung betrifft eine Regelung zur Verringerung der Rotorschwingungen, insbesondere deren Varianz, in einem Wellenstrang, insbesondere Turbinenstrang.

Aus der US 3,124,395 ist ein Verfahren zum Abstützen eines rotierenden Teils auf einer Vielzahl von Lagern bekannt. Dabei wird die Steifigkeit eines Lagers geändert, um eine kritische Drehzahl des rotierenden Teils zu ändern.

Aus der US 4,643,592 ist es bekannt, unerwünschte Vibrationen in rotierenden Maschinen zu kontrollieren. Hierzu werden bestimmte Parameter und damit Vibrationen kontrolliert, während die Maschine in Betrieb ist. Dies wird erreicht aus dem theoretischen Wissen über Rotordynamik, mechanische Schwingungen, automatische Steuerung, Fluiddynamik und Lagerkonstruktionstheorie.

Aus der US 5,099,966 ist ein Verfahren und eine Vorrichtung zur Regelung der Dämpfung von auf Wälzlagern rotierende Massen bekannt. Ein Öldruckfilm in einem Öldruckspalt ändert seine Viskosität über eine Kontrolle der Temperatur in Abhängigkeit vom Schwingungszustand der rotierenden Massen.

Aus der JP2005113805A ist eine Vorrichtung zum Verhindern einer instabilen Oszillation von Lagern unter Berücksichtigung der Lagereigenschaften bekannt. Die Vorrichtung dient dazu, zu verhindern, dass eine instabile Oszillation in dem Wellenstrang erzeugt wird, die aus einer Laständerung in einem durch Lager getragenen Drehkörper resultiert. Die Vorrichtung umfasst eine Recheneinheit und eine Steuereinheit. In der Recheneinheit wird ein Stabilitätsspielraum für die Wellenoszillation aus Lagercharakteristiken basierend auf einer Laständerung berechnet, und der Stabilitätsspielraum wird mit einem spezifizierten Referenzwert verglichen. In der Steuereinheit wird die Lagertemperatur auf der Grundlage eines Ergebnisses des Vergleichs zwischen einem berechneten Stabilitätsspielraum und dem spezifizierten Referenzwert gesteuert.

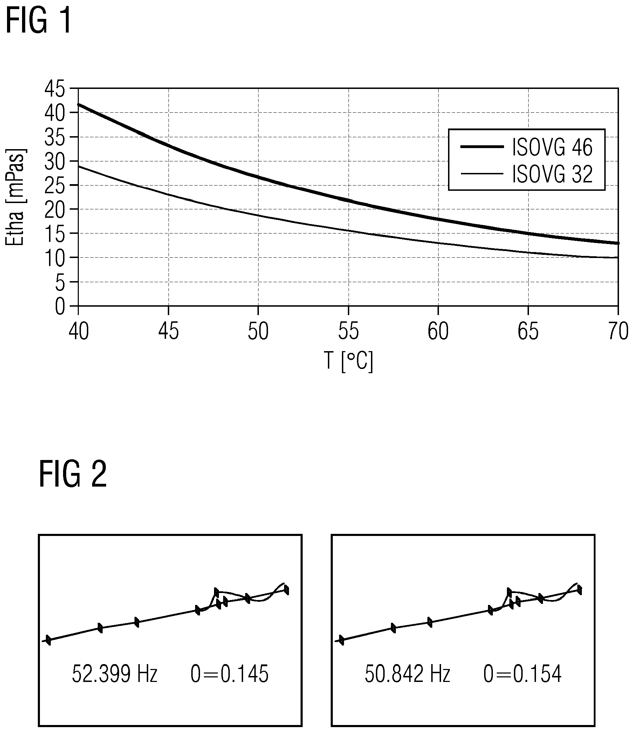

Im Generatorlager (und andern Lagern im Turbinenstrang) wird Schmieröl eingesetzt, um eine in hohem Maße verlustarme Rotation der drehenden Komponenten zu ermöglichen. Das Lagerschmieröl wird durch ein Drei-Wege-Mischventil 1 zum Lager hin gefördert. In dieses Mischventil strömt ein Schmieröl aus dem Ölkühler 3 und Schmieröl aus einem Bypass zu diesem Ölkühler. Der Grund für dieses Mischventil besteht darin, im Normalbetrieb eine Regeltemperatur von beispielsweise 46°C zu erreichen. Sobald die Kühlleistung unter den gegebenen Umgebungsbedingungen nicht ausreicht, um diese Temperatur sicherzustellen, stellen sich höhere Temperaturen ein. Insbesondere in heißen Umgebungen wird dieser Zustand oft erreicht, so dass die Lager auf die sich maximal einstellende Temperatur ausgelegt werden. Derzeit wird oftmals eine Maximaltemperatur von 55°C gefordert. Dies hat zur Folge, dass die Temperatur während des Betriebes zwischen 46°C und 55°C schwanken kann. Das entstehende Problem hierbei ist, dass auf Grund der Temperaturvariation das Lageröl unterschiedliche Viskositätswerte aufweist. Die Viskosität ist stark temperaturabhängig, siehe Fig 1.

Die Änderung der Viskosität zieht eine Änderung der Steifigkeits- und Dämpfungseigenschaften des Ölfilms und damit der dynamischen Eigenschaften (Eigenfrequenzen und Dämpfungsmaße) des Wellenstranges nach sich. Diese Varianz der dynamischen Eigenschaften wird aktuell in rotordynamischen Rechnungen nicht berücksichtigt. Hierdurch würden signifikanter Mehraufwand im Engineering und erhöhte Produktkosten entstehen, da statt einzelner Eigenfrequenzen und Dämpfungsmaße Eigenfrequenzbänder und Dämpfungsmaßbänder in der Auslegung Berücksichtigung finden müssten. Dies ist in Fig 2 beispielsweise anhand einer Mode eines untersuchten Einwellenstranges verdeutlicht. Die Eigenfrequenz der Mode verändert sich im Bereich der Schmierölzufuhrtemperatur um 1,4 Hz, das Dämpfungsmaß D um 0,9 %. Dies stellt eine rotordynamisch relevante Varianz im dynamischen Verhalten des Systems dar, die zu erhöhten Schwingungen führen kann. Angesichts strengerer Anforderungen seitens der Anlagenbetreiber bezüglich der vom Hersteller (Original Equipment Manufacturer, OEM) zu garantierenden Schwingungsgüte ist eine Begrenzung der Schwingungen anzustreben.

Der Erfindung liegt das Problem zugrunde, die Varianz der dynamischen Eigenschaften, insbesondere der Eigenfrequenzen und Dämpfungsmaße, des Wellenstranges zu verringern.

Das Problem wird durch eine Regelung mit den Merkmalen des Anspruchs 1 gelöst.

Die Erfindung sieht vor, eine aktive Regelung einzusetzen, welche die Lageröltemperatur mit Hilfe eines Ventils zu einem Bypass derart einstellt, dass die Rotorschwingungen minimal ausfallen.

Die Lagertemperatur 6 und die Wellenschwingungen werden gemessen. Die Daten werden ausgewertet und anhand eines Algorithmus wird die optimale Lageröltemperatur 8 zwecks Schwingungsminimierung berechnet. Diese Temperatur wird nun mit Hilfe eines Stellventils (Bypass) und dem Ölkühler eingestellt.

Diese Regelung soll die Information über Betriebsregime erhalten und durch Abgleich mit historischen Daten zu selben Betriebspunkten vorausschauend und selbstlernend steuern. Somit wird eine frühe Dämpfung ermöglicht und die Trägheit des Systems (Ventilregelzeit) wird kompensiert.

Die Lagerschmierölzufuhrtemperatur wird im Normalbetrieb derart geregelt, dass stets dieselben dynamischen Eigenschaften des Wellenstranges vorliegen. Dies wirkt sich regelmäßig positiv auf das Schwingungsverhalten aus. Die eingangs erwähnten Schwankungen der Eigenfrequenzen und Dämpfungen werden begrenzt. Im oben betrachteten Fall bedeutet dies, dass - abgesehen von anderen Rechenunsicherheiten und Varianzen - im Normalbetrieb stets das für die maximale Lagerschmierölzufuhrtemperatur errechnete rotordynamische Verhalten vorliegt. Somit kann der Wellenstrang in der Designphase genau auf den später vorliegenden Zustand optimiert werden. Durch die hieraus folgende Verbesserung des Schwingungsverhaltens entsteht ein Wettbewerbsvorteil.

Vorteilhafte Weiterbildungen der Erfindung sind in den Unteransprüchen angegeben.

Die Erfindung wird im Folgenden als Ausführungsbeispiel in einem zum Verständnis erforderlichen Umfang anhand von Figuren näher erläutert. Dabei zeigen:
- Fig 1: die Temperaturabhängigkeit der dynamischen Viskosität etha für typische Viskositätsklassen
- Fig 2: das dynamische Verhalten einer Einwellenanlage für unterschiedliche Schmierölzufuhrtemperaturen und
- Fig 3: einen die Erfindung realisierenden Temperaturgeregelten Schmierölkreislauf

In den Figuren bezeichnen gleiche Bezeichnungen gleiche Elemente.

Fig 1 zeigt eine graphische Darstellung der dynamischen Viskositätsgleichung nach Rost für die Viskositätsklassen ISOVG 32 (untere Linie) und ISOVG 46 (obere Linie).

Fig 2 zeigt das errechnete dynamische Verhalten einer Einwellenanlage mit einem Schmieröl der Viskositätsklasse ISOVG 32, in der linken Darstellung bei einer Schmierölzufuhrtemperatur von 46°C und in der rechten Darstellung bei einer Schmierölzufuhrtemperatur von 55°C.

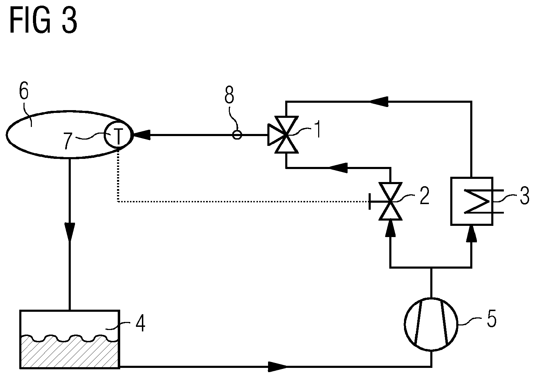

Der in Fig 3 dargestellte Ölkreislauf umfasst ein Lager 6 einen Lageröltank 4, eine Pumpe 5, einen Ölkühler 3, einen ein Ventil 2 aufweisenden Bypass zu dem Ölkühler und ein Mischventil 1, das den Ausgang des Ölkühlers und den Bypass zusammenführt. Die Temperatur des Lagers 6, das als Wärmequelle wirkt, wird mittels eines Temperatursensors 7 gemessen.

Die Temperatur 8 des dem Lager zugeführten Öls wird mit Hilfe des Ventils 2 einstellt.

Das dem Lager zugeführten Öl wird auf eine Temperaturhöhe 8 einstellt, wie sie als Ausgangsgröße in einer Zuordnungstabelle für minimierte Rotorschwingungen mit der gemessenen Temperatur des Lagers als Eingangsgröße abgespeichert ist.

Die vorliegende Erfindung wurde zu Illustrationszwecken anhand von konkreten Ausführungsbeispielen im Detail erläutert. Dabei können Elemente der einzelnen Ausführungsbeispiele auch miteinander kombiniert werden. Die Erfindung soll daher nicht auf einzelne Ausführungsbeispiele beschränkt sein, sondern lediglich eine Beschränkung durch die angehängten Ansprüche erfahren.

### Bezugszeichenliste

- 1 - 3-: Wege Mischventil
- 2 -: Regelventil Kühlerbypass
- 3 -: Kühler, Ölkühler
- 4 -: Tank, Lageröltank
- 5 -: Pumpe, Schmierölpumpe
- 6 -: Lager, Wärmequelle
- 7 -: Temperatursensor Lagertemperatur
- 8 -: Schmierölzufuhrtemperatur, Lageröltemperatur

## Patentansprüche

1. Regelung zur Verringerung der Rotorschwingungen, insbesondere deren Varianz, in einem Wellenstrang, insbesondere Turbinenstrang, bei dem
die Temperatur des Lagers (6) der Welle gemessen wird, wobei das Lager (6) durch ein Generatorlager gegeben ist,
das dem Lager zugeführte Öl (8) auf eine Temperatur eingestellt wird, wie sie als Ausgangsgröße in einer Zuordnung für minimierte Rotorschwingungen mit der gemessenen Temperatur des Lagers (6) als Eingangsgröße zugewiesen ist, wobei ein Ölkreislauf gegeben ist umfassend das Lager (6), einen Lageröltank (4), eine Pumpe (5), einen Ölkühler(3), einen ein Ventil (2) aufweisenden Bypass zu dem Ölkühler und ein Mischventil (1), das des Ausgang des Ölkühlers und den Bypass zusammenführt, wobei die Temperatur des dem Lager zugeführten Öls (8) mit Hilfe des Ventils (2) eingestellt wird, wobei zur initialen Zuordnung bei unterschiedlichen Temperaturen des Lagers (6) die dabei auftretenden Rotorschwingungen gemessen und die jeweiligen für eine Minimierung der Rotorschwingungen Lageröltemperaturen berechnet werden,
die jeweiligen Temperaturen des Lagers (6) als Eingangsgrößen und die zugehörigen berechneten Lageröltemperaturen als Ausgangsgrößen in der Zuordnung abgespeichert werden, wobei die Zuordnung als Ausgangsgrößen Erfahrungswerte enthält, die aus der Betriebshistorie des Wellenstranges gewonnen sind, womit eine frühe Dämpfung ermöglicht ist, und die Trägheit des Systems kompensiert ist.

2. Regelung nach Anspruch 1
**dadurch gekennzeichnet, dass**
die Zuordnung durch ein selbstlernendes System gegeben ist.

3. Regelung nach Anspruch 1 oder 2
**dadurch gekennzeichnet, dass**
die Zuordnung durch ein neuronales Netzwerk gegeben ist.

4. Regelung nach einem der vorstehenden Ansprüche **dadurch gekennzeichnet, dass** die Zuordnung durch einen Signalprozessor gegeben ist.

## Claims

1. Controller for reducing the rotor vibrations, in particular the variability thereof, in shafting, in particular turbine shafting, in which
the temperature of the bearing (6) of the shaft is measured, wherein the bearing (6) is provided by a generator bearing, the oil (8) supplied to the bearing is adjusted to a temperature as is assigned as the output variable in an allocation for minimised rotor vibrations with the measured temperature of the bearing (6) as the input variable, wherein an oil circuit is provided, comprising the bearing (6), a bearing oil tank (4), a pump (5), an oil cooler (3), a bypass having a valve (2) to the oil cooler and a mixing valve (1) which combines the output of the oil cooler and the bypass, wherein the temperature of the oil (8) supplied to the bearing is adjusted with the aid of the valve (2), wherein
for initial assignment with different temperatures of the bearing (6), the rotor vibrations occurring in the process are measured and the respective bearing oil temperatures for minimising the rotor vibrations are calculated, the respective temperatures of the bearing (6) are stored as input variables and the associated, calculated bearing oil temperatures are stored as output variables in the assignment, wherein
the assignment contains empirical values as output variables, said empirical values being obtained from the operating history of the shafting, whereby damping at an early stage is enabled and the inertia of the system is compensated.

2. Controller according to claim 1,
**characterised in that**
the assignment is provided by a self-learning system.

3. Controller according to claim 1 or 2, **characterised in that**
the assignment is provided by a neural network.

4. Controller according to one of the preceding claims, **characterised in that**
the assignment is provided by a signal processor.

## Revendications

1. Procédé de régulation pour diminuer les vibrations d'un rotor, en particulier sa variance, dans une ligne d'arbres, en particulier une ligne de turbines, dans lequel
on mesure la température du palier (6) de l'arbre, dans lequel le palier (6) est donné par un palier de générateur,
on règle l'huile (8) envoyée au palier à une température telle qu'elle est assignée comme grandeur de sortie dans une correspondance pour une minimisation des vibrations du rotor avec la température mesurée du palier (6) comme grandeur d'entrée, dans lequel il y a un circuit d'huile comprenant le palier (6), un réservoir (4) d'huile de palier, une pompe (5), un refroidisseur (3) d'huile, une dérivation, comportant une soupape (2), par rapport au refroidisseur d'huile et une soupape (1) de mélange, qui réunit la sortie du refroidisseur d'huile et la dérivation, dans lequel on règle la température de l'huile (8) envoyée au palier à l'aide de la soupape (2), dans lequel, pour la correspondance initiale à des températures différentes du palier (6), on mesure des vibrations du rotor qui se produisent ainsi, et on calcule les températures de l'huile du palier respectives pour minimiser les vibrations du rotor,
on met en mémoire les températures respectives du palier (6) comme grandeurs d'entrée et les températures d'huile du palier calculées, qui leur appartiennent comme grandeurs de sortie dans la correspondance, dans lequel la correspondance comprend comme grandeurs de sortie des valeurs expérimentales, qui sont obtenues à partir de l'historique de fonctionnement de la ligne d'arbres, grâce à quoi un amortissement précoce est possible et l'inertie du système est compensée.

2. Procédé de régulation suivant la revendication 1, **caractérisé en ce que**
la correspondance est donnée par un système d'autoapprentissage.

3. Procédé de régulation suivant la revendication 1 ou 2, **caractérisé en ce que**
la correspondance est donnée par un réseau neuronal.

4. Procédé de régulation suivant l'une des revendications précédentes,
**caractérisé en ce que**
la correspondance est donnée par un processeur de signal.
